(19) Europäisches Patentamt
European Patent Office
Office européen des brevets

(11) Publication number : **0 510 937 A2**

(12) **EUROPEAN PATENT APPLICATION**

(21) Application number : **92303600.8**

(22) Date of filing : **22.04.92**

(51) Int. Cl.$^5$ : **C08G 18/12,** C08G 18/66, C08G 18/72, C09D 175/04

(30) Priority : **23.04.91 US 690011**

(43) Date of publication of application : **28.10.92 Bulletin 92/44**

(84) Designated Contracting States : **AT BE CH DE DK ES FR GB GR IT LI LU MC NL PT SE**

(71) Applicant : **W.R. Grace & Co.-Conn.**
**1114 Avenue of the Americas**
**New York New York 10036 (US)**

(72) Inventor : **Hannemann, Gerd Kurt**
**63 Lakin Drive, Barry**
**South Glamorgan CF6 5AH (GB)**

(74) Representative : **Bentham, Stephen**
**J.A. Kemp & Co. 14 South Square Gray's Inn**
**London, WC1R 5LX (GB)**

(54) **Aqueous, dry abrasion and corrosion resistant polyurethane/epoxy coatings.**

(57) Emulsions of aqueous polyurethane or polyurethane/epoxy blends, when applied to a substrate such as metal and dried to form a coating, provide enhanced abrasion resistance and corrosion protection. The unblended polyurethane is formed from a polyurethane prepolymer prepared from one or more polyisocyanates, one or more polymeric diols and a mixture of trifunctional and difunctional amine-containing alcohols. When a blend of polyurethane and epoxy is used, the polyurethane prepolymer can be formed using either 100% trifunctional amine-containing alcohol or using a mixture of difunctional and trifunctional amine-containing alcohols.

EP 0 510 937 A2

This invention relates to storage stable cross-linked polyurethane emulsions, polyurethane/epoxy emulsion blends, and formulations therefrom, wherein the polyurethanes include amine-containing alcohols in the polymer backbone. As used herein, the term "storage stable" means that the emulsion is stable without coagulation of the emulsion particles for at least three months at ambient temperature. More particularly, this invention relates to polyurethane emulsions and emulsion blends of high solids content which can be formulated into coatings. The coatings have good abrasion resistance even after prolonged exposure to water, and have good corrosion protection properties.

Copolymers of polyurethane and epoxy are in general known, as taught by U.S. Patent No. 4,772,643. This patent discloses mixing aqueous emulsions of urethane oligomer and a polyepoxide and forming a film. The urethane is a primary amine-terminated oligomer having a portion of the amine functionality substituted by a salt of a volatile acid. Ketimine blocking agents are also employed. This patent does not disclose the use of amine-containing alcohols in the polymer backbone, nor does it disclose formulations having the combination of good abrasion resistance and protection against corrosion. In U.S. Patent No. 4,826,894 there is disclosed aqueous dispersions of polyurethane-ureas. The dispersions are formed by dispersing a blend of anionically modified isocyanate terminated prepolymer and epoxy resin in water and chain extending the dispersed blend with a polyamine.

It is also known to prepare and use unblended cross-linked polyurethane emulsions for coatings, as taught by European Patent Application No. 0296098 (EP '098). As disclosed therein, an aqueous emulsion of cross-linked polyurethane particles is prepared by first reacting a branched polyurethane prepolymer with a tertiary amine, followed by emulsification in an acid environment. The branched prepolymer is prepared by reacting a multifunctional alcohol with a hydrophobic polymeric diol or triol and a polyisocyanate. The emulsions are storage stable, and coatings produced from the emulsions have good physical properties, including abrasion resistance.

The polyurethane coatings of the prior art, although providing good and even superior performance in many respects, could be improved with respect to wet abrasion resistance and corrosion protection. Prior to the present invention, however, it was not thought that such improvements were attainable absent the use of very expensive, high performance polymers. Polyurethane itself is very expensive, and its replacement, in whole or in part, with even more expensive materials would render coatings produced therefrom uneconomical in many applications. Hence, there has been a need in the art for a coating composition with physical properties which improve on those of 100% polyurethane coatings and which are of comparable cost or, even better, of lower cost.

It is accordingly an object of the invention to provide an aqueous emulsion of a cross-linked polyurethane which is stable and hydrophobic, and which results in a coating on drying that has good abrasion resistance and that retains a high level of abrasion resistance even after prolonged exposure to water.

It is another object of the invention to provide an aqueous emulsion of a cross-linked polyurethane, as above, which will result in a corrosion-resistant coating on drying either by itself or in combination with a primary corrosion-inhibiting coating such as an electrodeposition coating.

It is yet another object of the invention to provide an aqueous emulsion blend of a cross-linked polyurethane and an epoxy, the blend having the above noted advantages of increased abrasion resistance and corrosion protection.

Still another object of the invention is to provide an emulsion blend which is film-forming without the necessity of using a volatile organic compound as a solvent or co-solvent.

The above objects of the invention are achieved by a storage stable, aqueous cross-linked polyurethane emulsion and by an aqueous emulsion blend of crosslinked polyurethane and epoxy particles capable of forming water resistant plastic coatings without heating at high temperatures. The polyurethane and the polyurethane blend both have increased abrasion resistance, in particular increased wet abrasion resistance, as well as good corrosion resistance.

In a first embodiment, a polyurethane emulsion is formed from a precross-linked hydrophobic polyurethane prepolymer which is the reaction product of one or more polyisocyanates, one or more polymeric diols or triols, and a combination of a trifunctional and a difunctional amine-containing alcohol.

In a second embodiment, a polyurethane emulsion is blended with an epoxy emulsion. The polyurethane of this second embodiment can be formed from a precross-linked hydrophobic polyurethane prepolymer, in which the amine-containing alcohol is 100% trifunctional or is a mixture of di- and trifunctional such alcohols. In both the first and second embodiments, the amount of trifunctional amine-containing alcohol is at least 60 mole % of the total alcohol used to make the polyurethane prepolymer.

The epoxy emulsion blended with the polyurethane emulsion of the second embodiment may be any of a number of well known epoxy resins or a combination of such resins.

By trifunctional amine-containing alcohol is meant an amino nitrogen substituted with three monoalcohol

groups. Similarly, by difunctional amine-containing alcohol is meant an amino nitrogen substituted by two monoalcohol groups. The third substituent on the amino nitrogen of the difunctional amine-containing alcohol is a non-hydroxy functional group such as alkyl, aryl, aralkyl, or the like.

In the embodiments of the invention where a blend of amine-containing alcohols is used to form the polyurethane prepolymer, at least about 60 mole % of a trifunctional amine-containing alcohol must be present. Where the polyurethane is used without blending with an epoxy, the level of trifunctional amine-containing alcohol can be as high as about 90 mole %, that is, at least about 10 mole % of the total amine-containing alcohol must be of the difunctional type.

Applicant has found that polyurethanes prepared with the combination of the trifunctional and difunctional amine-containing alcohols, provides unexpected improvements in wet abrasion protection and corrosion resistance. This is true both for coatings prepared solely from the polyurethane emulsion and for polyurethane-/epoxy emulsion blends.

Preferably, the amount of trifunctional alcohols is at least 70 mole % of the total amine-containing alcohol. Particularly preferred is an alcohol mixture containing between 70 and 80 mole % trifunctional alcohol. In a highly preferred embodiment, using a mixture of di- and trifunctional alcohols, the trifunctional amine-containing alcohol is triethanolamine and the difunctional amine is N-methyl diethanolamine.

When the amine-containing alcohol used in forming the polyurethane prepolymer is greater than 90 mole % trifunctional, the resulting polyurethane emulsion must be blended with an epoxy emulsion in order to achieve significant improvements in abrasion resistance and corrosion protection.

Di- and trifunctional amine-containing alcohols operable herein to form the polyurethane prepolymer include, but are not limited to, N-alkylated diethanolamines, N-arylated diethanolamines and N-alkarylated diethanolamines of the formula:

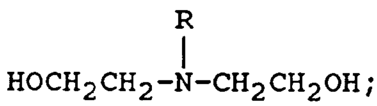

N-alkylated dipropanolamines, N-arylated dipropanolamines and N-alkarylated dipropanolamines of the formula:

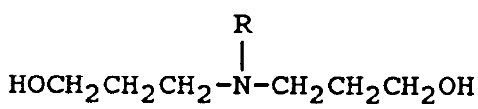

wherein R is an alkyl having 1-18 carbon atoms or an alkyl substituted or unsubstituted phenyl or benzyl, triethanolamine, tripropanolamine, N,N-bis(2-hydroxyethyl)piperazine, 1-[N-N-bis(2-hydroxyethyl)amino]-2-propanol, and the like. Where R is alkyl substituted phenyl or benzyl, preferably alkyl is alkyl of 1 to 6 carbon atoms.

The polyisocyanates used to form the polyurethane emulsions of the instant invention can be mixtures of aromatic and aliphatic isocyanate or either aromatic or aliphatic isocyanates per se. Operable aromatic isocyanates include, but are not limited to, tolylene diisocyanate, triphenylmethane-4,4′,4″-triisocyanate, benzene-1,3,5-triisocyanate, diphenyl-2,4,4′-triisocyanate, xylene diisocyanate, chlorophenylene diisocyanate, diphenylmethane-4,4′-diisocyanate, naphthalene-1,5-diisocyanate, xylene-alpha, 3,3′-dimethyl-4,4′-biphenylene diisocyanate, 3,3′-dimethoxy-4,4′-biphenylene diisocyanate, 2,2′,5,5′-tetramethyl-4,4′-biphenylene diisocyanate, 4,4′-methylene bis(phenylisocyanate), 4,4′-sulfonyl bis(phenylisocyanate) and 4,4′-methylene diorthotolylisocyanate.

As used herein, the term "aliphatic polyisocyanate" not only includes conventional aliphatic and cycloaliphatic isocyanates such as isophorone diisocyanate, hexamethylene diisocyanate and methylene dicyclohexyl diisocyanate, but also includes all isocyanate structures in which the NCO group is not directly attached to an aromatic ring. Thus, the term includes cycloaliphatic diisocyanates such as isophorone diisocyanate (IPDI), and it also includes structures such as:

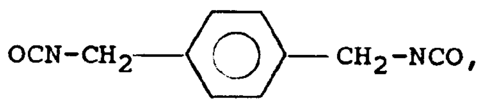, 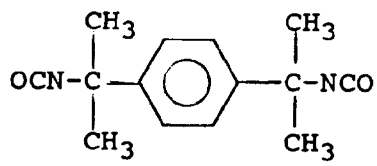

and the like. Other operable aliphatic isocyanates include, but are not limited to, ethylene diisocyanate, trimethylene diisocyanate, dicyclohexyl methane-4,4'diisocyanate, isophorone diisocyanate, 1,6-hexamethylene diisocyanate and 2,2,4-trimethyl-1,6-hexane diisocyanate.

The aromatic and aliphatic diisocyanates are added in approximately equal molar amounts in a preferred embodiment, but may be varied from this ratio to improve properties or achieve lower costs, taking precautions to maintain a sufficient concentration of aliphatic and/or aromatic isocyanate groups required to permit the formation of stable emulsions.

The polymeric polyols usable in forming the polyurethane prepolymer are chosen to be hydrophobic, since polyols having substantial water solubility would detrimentally affect wet abrasion resistance.

By virtue of ready availability and low cost, the polyalkylene ether diols and triols are the preferred polymeric polyols of this invention.

It is well known in the art, however, that polyethylene glycols are water soluble and hydrophilic, and are therefore to be avoided for the purposes of this invention, as are copolymers of ethylene oxide with higher alkylene oxides wherein the ethylene oxide content is greater than about 40 mole percent. Thus, it is important that the admixtures of polymeric polyols used to make the prepolymer be sufficiently hydrophobic as to be immiscible, i.e., they form two layers, when mixed with an equal volume of water. Hydrophobic polyols operable herein to form the prepolymer include, but are not limited to, polyalkylene-ether diols and triols, especially polypropylene glycols, polybutylene glycols and polytetramethylene ether glycols of M.W. 400-4,000; poly(caprolactone) diols and triols of M.W. 500-3,000; hydroxy-terminated poly(ethylene adipate) of M.W. 500-3,000; hydroxy-terminated poly(1,4-butylene adipate) of M.W. 500-3,000; poly(butadiene) diol of M.W. 500-3,000 and the like.

In general, the particular hydrophobic polymeric polyol or polyol blend used in forming the polyurethane prepolymer is selected based on the desired degree of abrasion resistance. The abrasion resistance of the coating generally increases as the amount of polymeric triol in the prepolymer increases.

In a preferred embodiment, the polymeric polyol is a poly(oxypropylene) diol and/or triol, with a preferred molar ratio of diol:triol of from about 1:0.2 to about 1:2.0.

The one or more amine-containing alcohols are combined with the isocyanate or isocyanate mixture and the polymeric diol or triol to form a branched polyurethane prepolymer having terminal isocyanate groups. As used herein, the term "branched" means a prepolymer containing an average of more than about 2.5, preferably from about 2.8 to about 3, terminal isocyanate groups per chain.

The thus formed polyurethane prepolymers are then, in a preferred embodiment, admixed with a fatty amine-containing surfactant, e.g., N,N-dimethyloctadecylamine. By "fatty amine" as used herein is meant an amine having at least one chain containing between 8 and 20 carbon atoms. Preferably the molecular weight of the amine is less than about 1000. The amount of the amine added to the prepolymer can vary, but is usually no more than about 1% by weight based on the weight of the prepolymer. The fatty amine-containing surfactants used herein upon acidification become cationic emulsifiers.

The emulsifier-containing prepolymers are then added with stirring to an equal weight (ordinarily, but not limiting) of acidified water (pH = 1.5-5.0), e.g., phosphoric acid in an amount of about 0.1%-1.0% but preferably about 0.3%-0.8% by weight of the prepolymer to be emulsified, sufficient to bring the pH of the product emulsion to a pH of from about 2 to about 5, preferably from about 2.4 to about 3.0 after protonation of all basic functional groups in the polymer and in the emulsifier. Alternatively the surfactant and acidified water can be combined prior to affixing with the polyurethane prepolymer.

During emulsification, the isocyanate groups react with the acidified water to form an equilibrium mixture of primary amines and their salts in a ratio determined to a large extent by the pH. The free amine groups react with unhydrolyzed isocyanate functions to cause chain extension through urea linkages while the amine salts, in contrast to the prior art, contribute to the emulsifiability of the urethane polymer. The reaction is continued for about 1 to 12 hours with vigorous foaming ($CO_2$ evolution) taking place. The thus formed hydrophobic, crosslinked polyurethane aqueous emulsions contain roughly about 20-25% solids. The emulsions may be concentrated to a solids concentration of from about 50% to about 70% solids, preferably from about 60% to about 65% solids, by exposing them to vacuum in a vacuum evaporator at temperatures ranging from about 20° to 50°C or by processing in a centrifuge or microfiltration or ultrafiltration membrane apparatus.

The resulting polyurethane emulsion is then combined with an aqueous epoxy emulsion to form a blend containing between about 2% and about 60% epoxy, preferably between about 5% and about 10% epoxy on a solids weight basis.

The epoxy emulsion is formed from a polyfunctional aromatic epoxy resin with an average functionality of about three, a particle size of from about 1 to about 5, preferably from about 1.5 to about 3.5, and a solids content of from about 50% to about 70% and preferably from about 55% to about 65% on a weight basis. The epoxy resins are prepared from aromatic, preferably phenolic, monoalcohols, diols or polyols. The mono or polyfunctional alcohol is reacted with a halogen-containing epoxide or dihalohydrin in an aqueous medium. By varying the ratios of the reactants, different molecular weight products can be obtained.

Illustrative of suitable dihydric phenols are 2,2-bis(4-hydroxyphenyl)propane, 2,2-bis(3-bromo-4-hydroxyphenyl)propane, 2,2-bis(3-chloro-4-hydroxyphenyl)propane, bis(4-hydroxyphenyl)methane, bis(4-hydroxyphenyl)sulphone, bis(4-hydroxyphenyl)sulphide, resorcinol, hydroquinone and the like. The preferred dihydric phenols are 2,2-bis(4-hydroxyphenyl)propane (bisphenol A) and bis(4-hydroxyphenyl)methane for reasons of cost and availability.

It is within the scope of this invention to use, in preparation of the urethane polymer, a single polyisocyanate monomer material or a mixture of different isocyanates such as a mixture of an aromatic isocyanate with an aliphatic isocyanate. It is preferred to use a mixture of aromatic isocyanate and aliphatic isocyanate in such a manner that the aminecontaining alcohol or alcohols, the hydrophobic polymeric diol or triol and the polyisocyanate are admixed in a mole ratio in the range of about 1:4-15:7-18, preferably 1:6-9:9-12, respectively. Due to the unlike reaction rates of the two isocyanates, the preponderant idealized molecular structure will have the aliphatic isocyanate in the terminal position. Due to the differing reaction rates of the two isocyanates, it is not necessary to build up the isocyanate-terminated prepolymer in a stepwise manner as in the prior art.

For example, in practicing one embodiment of the invention, the urethane prepolymer is prepared by charging six moles of an aromatic isocyanate, e.g., toluene diisocyanate (TDI), three moles of an aliphatic or cycloaliphatic isocyanate, e.g., isophorone diisocyanate (IPDI), six moles of a hydrophobic polyol, e.g., polypropylene glycol (PPG) and one mole of an amine-containing alcohol, e.g., triethanolamine (TEA), to a stirred container and letting the reaction continue for about 1 to 12 hours. During the reaction, an exotherm up to about 45°C occurs. To force the reaction to completion, a urethane forming catalyst, e.g., dibutyl tin dilaurate (DBTDL) is usually added to the system. Due to the reaction rates, the following reactions are believed to occur sequentially:

(1) Triethanolamine reacts with the aromatic isocyanate.

(2) The polypropylene glycol reacts with a substantial portion of the aromatic isocyanate.

(3) The aliphatic isocyanate reacts with the remaining -OH groups of the polypropylene glycol.

The reactions are carried out in an inert solvent such as methylethyl ketone, methylisobutyl ketone, acetone, toluene or dioxane.

As a result of the reaction rates, a polyurethane prepolymer having the following idealized structure is obtained:

```
IPDI-PPG-TDI-PPG-TDI-TEA-TDI-PPG-TDI-PPG-IPDI
                      |
                     TDI
                      |
                     PPG
                      |
                     TDI
                      |
                     PPG
                      |
                    IPDI
```

For attainment of best physical properties (tensile strength, resiliency, abrasion resistance, solvent resistance, heat distortion resistance, outdoor weathering resistance and the like), it is desirable that the polyurethane prepolymers of the present invention be branched rather than linear in structure. Branched prepolymers, i.e., those containing more than 2, preferably about 2.5-3 terminal isocyanate groups, on subsequent chain extension and cross-linking during emulsification will lead to the formation of crosslinked, elastomeric polyurethane products having a balance of the desirable physical properties outlined above.

It is desirable in the instant invention that, when forming the polyurethane prepolymer, the equivalent ratio of the isocyanate to total hydroxyl groups in the amine-containing alcohol or alcohols and in the hydrophobic diol or triol (NCO/OH ratio) be less than 1.4. Such a ratio affords a sufficiently low crosslink density in the emulsified polyurethane particle so as to result in a sufficiently soft coating that does not require heating in order to form a good bond with the substrate even at ambient conditions. This also contributes to good abrasion resistance. Higher NCO/OH ratios result in higher cross-linked densities requiring a heating step for good bonding and thus good abrasion resistance.

An important advantage of the invention is the ability to form films and coatings using no volatile organic compound (VOC) as a solvent. Many, if not most, prior art films have required a VOC at least as a co-solvent. Typical VOC solvents, such as n-methyl-pyrrolidone, are expensive and necessitate additional steps in the process for recovery of the solvent and to prevent environmental pollution.

Another important advantage of the invention is the ability to form urethane and urethane/epoxy films and coatings at temperatures of 100°C or less, for example, at ambient temperature. The resulting dried coatings are resistant to water and therefore retain outstanding abrasion resistance under repeated impact of projectiles such as gravel, steel shot and the like, even after the film has been exposed to or immersed in water for extended periods of time. In contrast, coatings of the prior art must be heat cured in order to develop wet abrasion resistance. To obtain the desired degree of water resistance, the polyurethane component of the emulsion or emulsion blend should be substantially free of solubilizing groups, and must be cross-linked. Further, the average size of the urethane particles should be at least about 1.0 μm in diameter so that the use of emulsifier is minimized. Also, only a small about of acid should be present in the dried coating.

To ensure that the urethane is sufficiently hydrophobic, it is desirable not only that the polymeric diol or triol be hydrophobic but that the tri- and optionally difunctional amine-containing alcohols should not contribute to water sensitivity of the cross-linked urethane.

To further improve water resistance, it is desirable to use as little emulsifier as possible in the polyurethane emulsion. This is accomplished by minimizing the surface area of the cross-linked urethane particles that must be coated with emulsifier to prevent coalescence of the particles during storage. This, in turn, is accomplished by keeping the particles in the range of about 1 to about 5 microns in diameter, desirably between about 1.5 and about 3.5 microns, and preferably between about 2 and about 3 microns in diameter. The practice of this invention allows the average particle size to be in the range of about 1-5 microns whereas the average particle size of emulsions of the prior art, for example, U.S. Patent No. 4,554,308, must be below one micron in order to be stable.

Yet another advantage of having polyurethane particles with an average diameter of at least about one micron is that it is possible to concentrate the emulsions to a solids content of more than 60% without the disadvantage of excessive viscosity. In recent years, those skilled in the coatings art have been seeking diligently to find a means to achieve coatings having very high concentrations of polymer solids therein. In the practice of this invention, it is surprisingly not uncommon to prepare polyurethane emulsions with 70% solids which have viscosity values of no more than 6 poise and which therefore can be compounded into a sprayable polyurethane/epoxy blend composition. Further, polymer solids contents as high as 74-75% are readily achieved. By comparison, the emulsions of the prior art, having an average particle size of less than one micron, cannot be concentrated to more than about 30% to 60% solids without obtaining highly viscous pastes that cannot be sprayed.

When the polyurethane emulsion of the invention having a high solids content is combined with an epoxy emulsion, the epoxy emulsion has a similar high solids content. The polyurethane or polyurethane/epoxy emulsion blend may be sprayed onto a surface and allowed to dry. An important advantage of attaining a high solids content for the emulsion or emulsion blend is the ability to dry at ambient temperature into a coating within a short time after application to a surface. The rapid consolidation of the cross-linked polyurethane and optionally epoxy particles in the applied emulsion occurs because it is necessary to evaporate only a small amount of water before the particles can come into contact with one another to begin the process of coalescence into a continuous film.

The di- and trifunctional amine-containing alcohols, when embedded in a cross-linked urethane polymer matrix, do not introduce a solubilizing group of sufficient importance to affect wet abrasion resistance. However, during the synthesis of the isocyanate-terminated prepolymer, the tertiary amine-containing alcohols may serve as catalysts for the urethane-forming reactions, thus reducing the amount of auxiliary catalyst, such as dibutyl tin dilaurate, that must be used if it is desired to complete the urethane-forming reactions within a given length of time.

In practicing the invention, non-carboxylic, i.e., inorganic acid is used to form the salt of the surfactant. The resulting surfactant is stable in aqueous environment. Acids that maintain their acid character in the range 20 to 200°C are preferably employed to give a pH in the range of about 1.5 to 5.0 to the water and preferably a

pH of about 2.5 to about 3.0. Preferably, acids having only one ionizable hydrogen ion having a disassociation constant (pH) lower than about 4 and which are not corrosive to the substrate on which the coating is applied are used. Obviously, corrosion would not be a factor in selecting the acid if the substrate, e.g., metal, has already been precoated with a non-corrosive coating. The preferred acids employed herein are phosphoric acid and methanesulfonic acid.

It is within the scope of this invention to use non-ionic surfactants or combinations of non-ionic and cationic surfactants to prepare the emulsions. Portions of these surfactants may be added prior to emulsification or in a post treatment step after the initial emulsion has been prepared in order to further stabilize the emulsion against premature coagulation, settling or gelation during production, shipment and storage or to impart improved properties.

The degree of abrasion resistance desired is to an extent a function of the particular use intended for the coating. For example, where the coating is to be applied as an automobile body undercoating, a very high level of abrasion resistance is required, and consequently a relatively large amount of polymeric triol is used. However, when the coating is employed as a coating not exposed to severe abrasion, the polymeric polyol can include a substantial amount of a diol.

The hydrophobic polyurethane emulsions of the instant invention can be used per se or may be formulated with conventional additives to form abrasion-resistant, anticorrosive coatings. Such coatings can be used on various substrates including metals, wood, glass, concrete, plastic, fabric, fiber, paper, preferably metals including surfaces previously coated or painted with other classes of coating materials. One field in which the coatings are especially useful in the automotive industry. Therein the formulated aqueous emulsion can be used as underbody coatings, chip-resistant coatings, rocker panel coatings, wheel well coatings and for wash-resistant replacements for cavity conservation waxes. A particular application in the automotive industry is as a secondary coating over an electrodeposition coating (E-coat). The products of the present invention are durable, wear-resistant, corrosion protective and do not contain volatile organic compounds as solvents that may contribute to air pollution during application in the factory environment.

In formulating the coatings, conventional additives such as thinners, thixotropic agents, antioxidants, antiblistering agents, pigments or dyes, anti-UV agents, anticorrosion additives and possibly extending "fillers" (inorganic powders, oils, resins), reinforcing agents (fibers, platelets, cross-linkers, latexes), thickeners, plasticizers and the like can be added to the emulsion.

The additives are each added in amounts ranging from about 0.01 to 25% by weight of the aqueous emulsion. The additives can be added prior to emulsification, but, preferably, are added after the emulsion is formed by adding each additive subsequently in an appropriate order with stirring for about 1 to 30 minutes or more. In many instances it is preferred to admix the additives with small amounts of water to form a paste or master batch prior to adding it to the system.

The following examples will explain, but expressly not limit, the instant invention. Unless otherwise noted, all parts and percentages are by weight.

In all examples herein practicing the instant invention, the cross-linked polyurethane particles in the aqueous emulsion blend have an average particle size in the range of from about 1 to about 5 microns in diameter.

The polyurethane and polyurethane/epoxy blends produced in the examples were evaluated by the Peugeot-Renault Abrasion Test. In this test, the emulsion coatings were applied to a 3″ X 6″ steel panel electrocoated with a composition commercially available from Pittsburgh Plate Glass Co. under the tradename "ED-3076". Coatings were dried under ambient conditions overnight to thicknesses of nominally 15 mils. The dried panels were then tested for abrasion resistance in both the dry and wet state on a "Shot Blaster", manufactured by Auer, Mannheim, Germany (Model Strahlanlage-ST800A).

The abrasion test was the same for both dry and wet panels. The test consisted of shot blasting the coated panel with a crushed spherical cast steel shot type GP-14 Wheelabrator-Allevard at an air pressure of 70 psi at an angle of 60° until full penetration of the coating to expose bare steel was visibly noted. For dry samples, a blasting period in excess of 300 seconds was considered acceptable. For wet samples, a blasting period greater than 200 seconds is acceptable. Panels tested in the wet state were soaked in demineralized water for 16 hours prior to testing. They were exposed to shot blasting immediately after removal from water. Those near 0.010" in thickness resisted shot blasting for about 200-300 seconds, and those near 0.015" in thickness resisted shot blasting for about 500 seconds.

COMPARATIVE EXAMPLE 1

A polyurethane prepolymer was prepared wherein the isocyanate was a blend of 7 moles of toluene diisocyanate (TDI) and 2 moles of isophorone diisocyanate (IPDI), the amine-containing alcohol was 100% triethanolamine (TEA) with no difunctional amine-containing alcohol being used, and the hydrophobic polymeric polyol

was difunctional poly(oxypropylene)glycol having a molecular weight of 1000. The above reactants were combined and reacted as described previously, thereby forming a reaction mixture containing the prepolymer. An emulsion of the prepolymer was formed as follows:

Into a 1 gallon Waring Blender were charged 600g demineralized water containing 4.67g of phosphoric acid (85%). The acidified water had a pH of 2.22.

Into another container were combined 600g of the above reaction mixture along with 1.2g of an emulsifier, i.e., N,N-dimethyloctadecylamine, commercially available from Armak under the tradename "Armeen DM-18D". The admixture was stirred for about 5-6 minutes to obtain a homogeneous admixture. The thus emulsifier-containing prepolymer solution was then charged to the phosphoric acid containing water with high speed stirring, and the reaction was continued for about 7 minutes. The emulsifier on neutralization by the opposing counter ion (e.g., phosphoric acid) became a cationic surfactant. During the reaction copious foaming ($CO_2$ evolution) took place which subsided considerably after about 1 hour. The resultant emulsion was 20-25% solids.

The emulsion was concentrated using a Buechi Rotavapor R connected to house vacuum and heated occasionally (usually less than 35°C) using a water bath. In this manner, about 4 hours were required to strip enough liquid to produce an emulsion with a solids content of about 65 wt.%.

The emulsion was coated over electrocoated panels and over cold rolled steel panels, and air dried overnight. The thickness of the coating was nominallyl 15 mils.

The coated panels were then subjected to the above-described Peugeot-Renault Abrasion Test and to a Salt Corrosion Test whereby the coated panels are placed in a salt fog chamber with 5% NaCl aqueous solution forming the fog. The results are summarized in the Tables below.

## EXAMPLE 1

The polyurethane prepolymer emulsion of Comparative Example 1 was combined with an emulsion of a polyfunctional aromatic epoxy resin with an average functionality of three, a particle size of 1-2u and a solids content of 55 wt.%. The epoxy emulsion was blended with the polyurethane emulsion at a level of 10% by weight (solids basis). Coatings were formed in the same manner as in Comparative Example 1 and subjected to similar testing. The results are summarized in the Tables below.

## EXAMPLE 2

A polyurethane prepolymer was prepared wherein the isocyanate was a blend of 7 moles of toluene diisocyanate (TDI) and 2 moles of isophorone diisocyanate (IPDI), the amine-containing alcohol was a blend of triethanolamine and N-methyl diethanolamine (DEA) in an 80/20 mole ratio, and the hydrophobic polymeric polyol was a blend of poly(oxypropylene)diol and -triol both having a molecular weight of 1000. An emulsion containing the prepolymer was formed in the same manner as in Comparative Example 1. Coatings were also formed and tested in the same manner as in Comparative Example 1. The results are summarized in the Tables below.

## EXAMPLE 3

The polyurethane prepolymer emulsion of Example 2 was combined with an emulsion of the same polyfunctional aromatic epoxy resin used in Example 1. The epoxy emulsion was blended with the polyurethane emulsion at a level of 10% by weight (solids basis). Coatings were formed in the same manner as in Comparative Example 1, and subjected to similar testing. The results are summarized in the Tables below.

## EXAMPLE 4

The polyurethane prepolymer emulsion of Comparative Example 1 was combined with an emulsion of a polyfunctional aromatic epoxy resin with an average functionality of three, a particle size of 1-2u and a solids content of 55 wt.%. The epoxy emulsion was blended with the polyurethane emulsion at a level of 10% by weight (solids basis). The thickness of the coating was nominally 2 mils. Coatings of this thickness are used for corrosion protection (i.e. conservation) of unexposed surfaces such as internal door panel cavities and rocker panel cavities. Because cavity conservation applications do not involve exposure to sources of abrasion the Peugeot-Renault Abrasion Tests were not performed. The results of the Salt Fog Corrosion Test are summarized below.

EXAMPLE 5

A coating was prepared in a manner similar to that of Example 4, except that the amount of epoxy in the blend was 50 wt%. The results of the Salt Fog Corrosion Test are summarized below. The test was discontinued after 300 hours since this time period represents sufficient evidence of corrosion protection for cavity conservation applications.

TABLE 1

Dry Abrasion Test

| Coating | Coating Thickness | Penetration Time |
|---|---|---|
| Comparative Example 1 (100% TEA) | 15 mils | 500 sec |
| Example 1 (100% TEA, 10% epoxy) | 16 mils | 803 sec |
| Example 2 (TEA/DEA) | 14 mils | 910 sec |
| Example 3 (TEA/DEA, 10% epoxy) | 15 mils | 858 sec |

TABLE 2

Wet Abrasion Test
(18 hours water immersion)

| Coating | Coating Thickness | Penetration Time |
|---|---|---|
| Comparative Example 1 (100% TEA) | 15 mils | 10 sec |
| Example 1 (100% TEA, 10% epoxy) | 15 mils | 283 sec |
| Example 2 (TEA/DEA) | 15 mils | 110 sec |
| Example 3 (TEA/DEA, 10% epoxy) | 15 mils | 251 sec |

TABLE 3

Salt Fog Corrosion Test

| Coating | Coating Thickness | Salt Fog Chamber Exposure, Hours | | | | | |
|---|---|---|---|---|---|---|---|
| | | 50 | 100 | 300 | 400 | 600 | 1000 |
| Comparative (100% TEA) Example 1 | 15 mils | Rust | - | - | - | - | - |
| Example 1 (100% TEA, 10% epoxy) | 15 mils | No Rust | No Rust | No Rust | Rust | - | - |
| Example 2 (TEA/DEA) | 15 mils | No Rust | No Rust | Rust | - | - | - |
| Example 3 (TEA/DEA, 10% epoxy) | 15 mils | No Rust | No Rust | No Rust | No Rust | No Rust | No Rust |
| Example 4 (TEA, DEA,) 10% epoxy) | 2 mils | No Rust | No Rust | Rust | - | - | - |
| Example 5 (TEA, DEA, 50% epoxy) | 2 mils | No Rust | No Rust | No Rust | - | - | - |

The above results indicate the unexpected improvements obtained in abrasion resistance and corrosion protection obtained using coatings formed from the polyurethanes and polyurethane/epoxy blends of the invention. Very significant improvements are obtained when a 15 mil coating of polyurethane prepared using 100% triethanolamine (TEA) (Comparative Example 1) is modified by partially substituting N-methyl diethanolamine (DEA) in preparation of the prepolymer (Example 2). Equally significant improvements are obtained when a polyurethane prepared from 100% TEA is combined with an epoxy (Example 1). Even further improvement is observed when polyurethanes prepared from a blend of di- and trifunctional amine-containing alcohol (TEA/DEA) is blended with an epoxy (Example 3).

For cavity conservation applications such as internal body panels and rocker panels of automobiles, a 2 mil thick 10% epoxy blend coating provides significant protection against corrosion (Example 4). A 50% epoxy blend provides even greater corrosion protection (Example 5).

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

**1.** A storage stable, aqueous emulsion comprising cross-linked polyurethane particles capable of forming a water-resistant plastic coating, comprising:

(A) a polyurethane emulsion obtainable by:

(1) forming in an inert solvent a branched polyurethane prepolymer from (a) a trifunctional amine-containing alcohol optionally mixed with a difunctional amine-containing alcohol, such that at least

about 60 mole% of said mixture is trifunctional amine-containing alcohol, (b) a hydrophobic polymeric diol or triol or a mixture thereof, and (c) one or more polyisocyanates;

(2) admixing the branched prepolymer from (1) with a fatty amine-containing surfactant and acidic water containing an inorganic acid, in amounts sufficient to form a cross-linked polyurethane emulsion; and

(3) optionally removing a portion of water from the polyurethane emulsion thus formed; and

(B) where (a) is a trifunctional amino-containing alcohol

a non-ionic aqueous emulsion of a polyfunctional aromatic epoxy resin, the amount of epoxy emulsion being from 2% to 60% by weight based on the total solids of polyurethane and epoxy; or

where (a) is a mixture of di- and tri-functional amino-containing alcohols, optionally a non-ionic aqueous emulsion of a polyfunctional aromatic epoxy resin, the amount of epoxy emulsion being from 2% to 60% by weight based on the total solids of polyurethane and epoxy.

2. An aqueous emulsion according to claim 1, which is obtainable using a mixture of (a), (b) and (c) to form the polyurethane prepolymer such that the equivalent ratio of total isocyanate to total hydroxyl in the mixture is less than 1.4:1.

3. An aqueous emulsion according to claim 1 or 2 which is obtainable using a mole ratio of (a):(b):(c) of 1:4-15:7-18, respectively to form the polyurethane prepolymer.

4. An aqueous emulsion according to claim 1, 2 or 3 wherein the alcohol (a) is selected from the group consisting of N-alkylated diethanolamines, N-arylated diethanolamines, N-alkarylated diethanolamines of the formula $HOCH_2CH_2N(R)CH_2CH_2OH$, N-alkylated dipropanolamines of the formula $HOCH_2CH_2CH_2$-$N(R)CH_2CH_2CH_2OH$, wherein R is alkyl of 1 to 18 carbon atoms or alkyl substituted or unsubstituted phenyl or benzyl, triethanolamine, tripropanolamine, N,N-bis(2-hydroxyethyl)piperazine and 1-[N,N-bis(2-hydroxyethyl)amino]-2-propanol.

5. An aqueous emulsion according to any one of the preceding claims wherein the alcohol (a) is a mixture of triethanolamine and N-methyl diethanolamine.

6. An aqueous emulsion according to claim 5, wherein the triethanolamine comprises more than about 70 mole% of the total amine-containing alcohol.

7. An aqueous emulsion according to any one of the preceding claims wherein the hydrophobic polymeric diol or triol (b) comprises a blend of poly(oxypropylene)-diol and - triol in the mole ratio of diol:triol of from 1:0.2 to 1:2.0.

8. An aqueous emulsion according to any one of the preceding claims wherein the polyurethane emulsion has a particle size of from 1.0 to 5.0 microns and a pH of from 1.5 to 5.0.

9. An aqueous emulsion according to claim 8, wherein the polyurethane emulsion has a particle size of from 1.5 to 3.5 microns and a pH of from 2.5 to 3.0.

10. An aqueous emulsion according to any one of the preceding claims wherein the polyurethane emulsion (A) has a solids content from 50% to 70% by weight and comprises less than 1% by weight of residual acid.

11. An aqueous emulsion according to claim 10, wherein the solids content of the polyurethane emulsion is from 60% to 65% by weight.

12. An aqueous emulsion according to any one of the preceding claims comprising epoxy emulsion (B) having a particle size of from 1 to 5 microns and a solids content of from 55 to 65% by weight.

13. An aqueous emulsion according to any one of the preceding claims comprising 5% to 10% by weight of epoxy emulsion based on the total solids of polyurethane and epoxy.

14. An aqueous emulsion according to any one of the preceding claims which further comprises at least one additive which is an antioxidant, UV stabiliser, corrosion inhibitor, antiblistering agent, thixotropic agent or colouring agent.

**15.** A process for preparing an aqueous emulsion as claimed in any one of the preceding claims, which comprises:

(A) preparing a polyurethane emulsion by

(1) forming in an inert solvent a branched polyurethane prepolymer from (a) a trifunctional amine-containing alcohol optionally mixed with a difunctional amine-containing alcohol, such that at least about 60 mole% of said mixture is trifunctional amine-containing alcohol, (b) a hydrophobic polymeric diol or triol or a mixture thereof, and (c) one or more polyisocyanates;

(2) admixing the branched prepolymer from (1) with a fatty amine-containing surfactant and acidic water containing an inorganic acid, in amounts sufficient to form a cross-linked polyurethane emulsion; and

(3) optionally removing a portion of the water from the polyurethane emulsion thus formed; and

(B) where (a) is a trifunctional amino-containing alcohol, mixing the polyurethane emulsion with a non-ionic aqueous emulsion of a polyfunctional aromatic epoxy resin, the amount of epoxy resin being from 2% to 60% by weight based on the total solids of polyurethane and epoxy; or

where (a) is a mixture of di- and tri-functional amino-containing alcohols, optionally mixing the polyurethane emulsion with a non-ionic aqueous emulsion of a polyfunctional aromatic epoxy resin, the amount of epoxy emulsion being from 2% to 60% by weight based on the total solids of polyurethane and epoxy.

**16.** A process for coating a substrate which comprises coating said substrate with an aqueous emulsion as claimed in any one of claims 1 to 14 and drying the emulsion to obtain a cured coating.

**17.** A process according to claim 16 wherein the emulsion is dried at a temperature of no more than about 100°C.

**18.** A process according to claim 16 or 17 wherein the substrate is an automotive underbody, an automotive side sill or an automotive internal cavity.

**19.** A corrosion-resistant or abrasion-resistant composite comprising a substrate having a cured coating of an aqueous emulsion as claimed in any one of claims 1 to 14.